# EUROPÄISCHE PATENTANMELDUNG

(11) **EP 2 787 049 A1**
(43) Veröffentlichungstag der Anmeldung: **08.10.2014**
(21) Anmeldenummer: 14001149.5
(22) Anmeldetag: 28.03.2014
(51) Int. Cl.: C09J 7/04, D06N 7/00, B44C 7/00

(54) **Wandbelag insbesondere Tapete mit aktivierbarer Klebstoffschicht**

(30) Priorität: 03.04.2013 DE 102013005666
(71) Anmelder: Erfurt & Sohn KG, 42399 Wuppertal (DE)
(72) Erfinder: Klix, Jürgen, 42399 Wuppertal (DE)
(74) Vertreter: Cohausz Hannig Borkowski Wißgott

(57) **Zusammenfassung**

Die Erfindung betrifft einen Wandbelag insbesondere Tapete mit einer vorderseitigen Lage aus Papier, Papiervlies aus Cellulose- und Kunststofffasern, Raufaser oder Textile und einer durch Wasser aktivierbaren trockenen Klebstoffschicht auf der Rückseite, wobei zwischen der vorderseitigen Lage und der Klebstoffschicht eine wasserundurchlässige Sperrschicht angeordnet ist, die eine hohe Anzahl offener, wasserdurchlässiger Stellen oder Bereiche aufweist.

In einer bevorzugten Ausführungsform sind die wasserdurchlässigen Stellen oder Bereiche als Schlitze in der wasserundurchlässigen Sperrschicht ausgebildet.

## Beschreibung

Die Erfindung betrifft einen Wandbelag insbesondere Tapete mit einer vorderseitigen überstreichbaren oder bedruckbaren Lage aus Papier, Papiervlies aus Cellulose- und Kunststofffasern, Raufaser oder Textile und einer durch Wasser aktivierbaren trockenen Klebstoffschicht auf der Rückseite.

Aus der DE 26 23 903 A1 ist es bekannt, eine Tapetenbahn rückseitig mit einer trockenen Kleisterbeschichtung zu versehen, die vor dem Anbringen an eine Wand mit Wasser befeuchtet und damit aktiviert wird, so dass dann die Tapetenbahn an die Wand gelegt werden kann. Hierbei hat es sich gezeigt, dass beim Anfeuchten der trockenen Kleisterschicht die dem Kleister zugegebene Feuchtigkeit sofort in die vordere Papierschicht zieht und damit der Kleister so früh und schnell trocknet, dass ein Verschieben der Tapete auf der Wand in die richtige Lage schon nach kürzester Zeit nicht mehr möglich ist.

Ein frühes Trocknen des Kleisters kann dadurch verhindert werden, dass zwischen der vorderseitigen Papierlage und der rückseitigen Klebstoffschicht eine vollflächige Sperrschicht angeordnet wird. Durch eine solche Maßnahme gelangt das zum Aktivieren der Klebstoffschicht auf die Rückseite aufgebrachte Wasser nicht vorzeitig in die vorderseitige überstreichbare oder bedruckbare Lage, sondern verbleibt ausreichend lange in der Klebstoffschicht, so dass genügend Zeit zur Verfügung steht, um den Wandbelag in die exakt richtige Lage zu bringen. Hierbei kann es aber geschehen, dass der Kleister sehr langsam trocknet und über diesen langen Zeitraum die vorderseitige Lage schneller trocknet und schrumpft, so dass die Nahtstellen zwischen den Wandbelagsbahnen sich öffnen.

Aufgabe der Erfindung ist es, einen Wandbelag der eingangs genannten Art so zu verbessern, dass die Verarbeitung des Wandbelags erleichtert und ein vorzeitiges Trocknen der auf der Rückseite befindlichen Klebstoffschicht verhindert wird, aber ein vorzeitiges Schrumpfen der vorderseitigen Lage verhindert wird.

Diese Aufgabe wird erfindungsgemäß dadurch gelöst, dass zwischen der vorderseitigen Lage und der Klebstoffschicht eine wasserundurchlässige Sperrschicht angeordnet ist, die eine hohe Anzahl offener, wasserdurchlässiger Stellen oder Bereiche aufweist.

Durch die wasserdurchlässigen Stellen oder Bereiche wird an diesen Stellen der Klebstoff stellenweise aktiviert. Dies führt dazu, dass an diesen Stellen der Wandbelag vorzeitig an der Wand angeheftet wird, so dass ein Verziehen oder Verrutschen des Wandbelags sicher verhindert wird und damit die Nähte sich nicht öffnen können.

Hierbei ist der Vorteil nicht nur bei einer aus Papier bestehenden vorderseitigen Lage gegeben, sondern auch bei einem Wandbelag mit einer vorderseitigen Lage aus einem Papiervlies aus Cellulose- und Kunststofffasern, Raufaser oder Textile.

Hierbei ist von Vorteil, wenn die offenen Stellen oder Bereiche über die Fläche der Sperrschicht gleichmäßig verteilt sind. Ferner können die offenen Stellen oder Bereiche von eingeschnittenen Schlitzen gebildet sein. Dabei können die Schlitze in Längsrichtung des bahnenförmigen Wandbelags angeordnet sein. Auch ist von Vorteil, wenn die Schlitze durch Strecken des Wandbelags quer zur Schlitzlängsrichtung sich öffnen lassen.

Ein weiterer Vorteil einer solchen Sperrschicht besteht darin, dass eine solche Tapete nach ihrem Anbringen an der Wand später vielfach überstrichen werden kann. Ohne eine solche Sperrschicht wird beim mehrfachen Überstreichen die Feuchtigkeit jeweils noch einmal zum Kleister gebracht und der Kleister bzw. die Klebkraft des Kleisters immer mehr aufgehoben. Dies wird dadurch verhindert, dass die Sperrschicht die Feuchtigkeit des Überstreichens von der Kleisterschicht abhält und damit der Kleister nicht feucht wird und die Tapete einen gleichbleibenden Halt an der Wand behält.

Eine ausreichende Wassersperre ist dann gegeben, wenn die Sperrschicht einen Kunststoff insbesondere Polyethylen, Polypropylen oder einen Schmelzklebstoff aufweist oder von einer Folie gebildet ist.

Besonders vorteilhaft ist es, wenn die Klebstoffschicht mit einem Zusatz versehen ist, zum Trockenabziehen des Wandbelags von der Wand. Hierbei kann der Zusatz Wachs insbesondere Wachskügelchen, Mikrokapseln und/oder Stearate aufweisen.

Vorzugsweise wird vorgeschlagen, dass die Klebstoffschicht unter Erwärmung auf die Sperrschicht aufgewalzt insbesondere hineingewalzt ist. Hierdurch kommt es zu einer thermischen Fixierung der Kleisterschicht in die Sperrschicht, statt einer chemischen Fixierung.

Ferner kann die Sperrschicht durch ein Druckverfahren auf die Rückseite der vorderseitigen Lage aufgebracht sein. Hierbei ist von Vorteil, wenn beim Druckverfahren offene Stellen oder Bereiche in der Sperrschicht verbleiben. Vorzugsweise wird vorgeschlagen, dass durch das Druckverfahren die Sperrschicht in Form eines regelmäßigen Musters mit offenen Stellen oder Bereichen aufgebracht wird. Besonders vorteilhaft ist es, wenn die offenen Stellen oder Bereiche 3 bis 25 Prozent vorzugsweise 5 bis 10 Prozent der Fläche der Sperrschicht bilden.

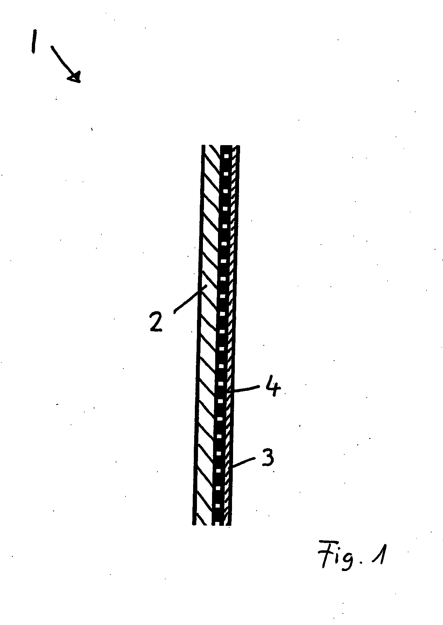

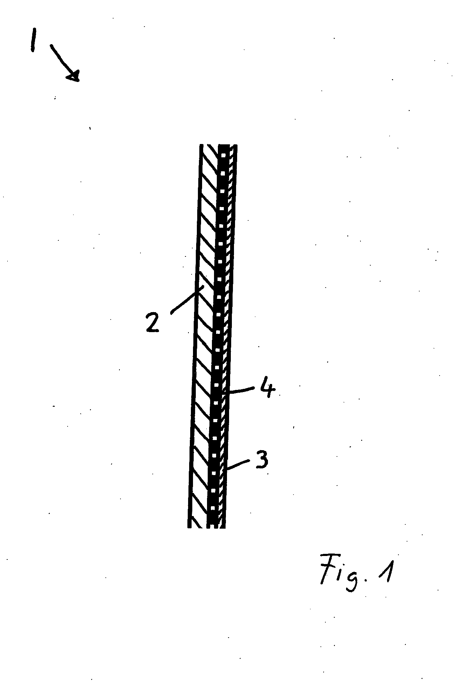

Zwei Ausführungsbeispiele der Erfindung sind in den Zeichnungen dargestellt und werden im Folgenden näher beschrieben. Es zeigen
- Fig. 1: einen vergrößerten Schnitt durch den Wandbelag,

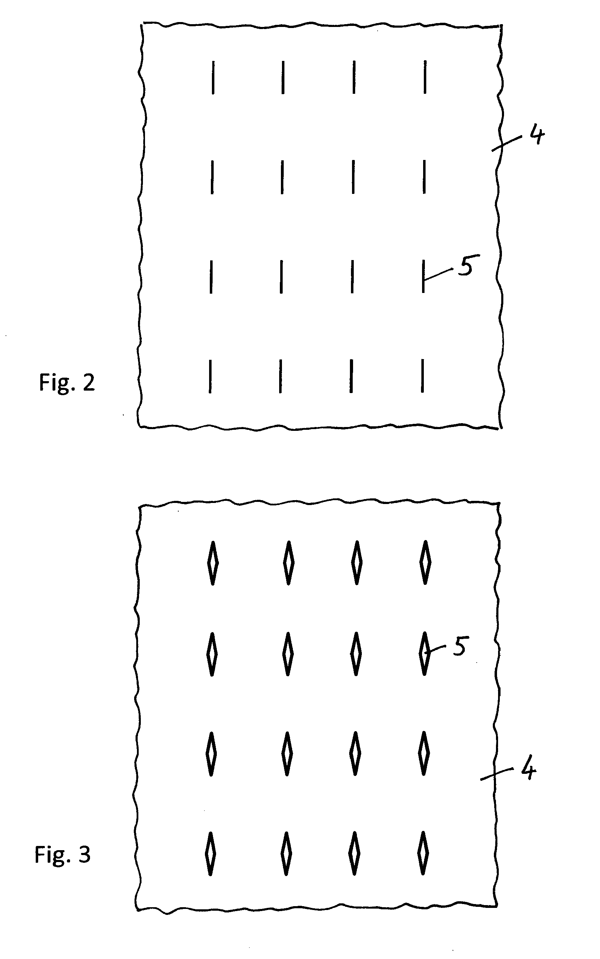

- Fig. 2: einen Ausschnitt aus der Sperrschicht mit schlitzenförmigen Stellen/Bereichen,
- Fig. 3: einen Ausschnitt aus der Sperrschicht mit erweiterten, schlitzenförmigen Stellen/Bereichen.

Ein Wandbelag 1 insbesondere eine Tapete weist eine vorderseitige Lage 2 auf, deren Außenseite nach dem Anbringen auf einer Wand sichtbar bleibt. Auf der Rückseite der vorderseitigen Lage ist eine Klebstoffschicht 3 werksseitig aufgebracht, die trocken bzw. nicht feucht ist und kurz vor dem Anbringen des Wandbelags auf einer Wand durch Benässen mit Wasser aktiviert wird. Hierbei handelt es sich vorzugsweise um einen Standardkleister insbesondere einen in kaltem Wasser löslichen Kleister.

Zwischen der vorderseitigen hygroskopischen Lage 2 und der Klebstoffschicht 3 insbesondere der Kleisterschicht ist auf die Rückseite der vorderseitigen Lage 2 eine Sperrschicht 4 aufgebracht, die im Wesentlichen - bis auf die unten angeführten wasserdurchlässigen Stellen oder Bereiche - wasserundurchlässig ist und damit dafür sorgt, dass beim Anfeuchten der Klebstoffschicht 3 die Feuchtigkeit in der Klebstoffschicht verbleibt und damit von der vorderseitigen hygroskopischen Lage 2 nicht aufgesaugt werden kann. Diese Sperrschicht 4 ist vorzugsweise kein bahnenförmiges Material und keine Folie, sondern eine auf die Lage 2 rückseitig aufgebrachte dünne Schicht ähnlich einer Oberflächenvergütung.

Als Sperrschicht 4 wird ein Kunststoff insbesondere Polyethylen, Polypropylen oder ein Schmelzklebstoff vorgeschlagen, der insbesondere aufgewalzt, aufgesprüht oder aufgedruckt wird. Stattdessen kann die Sperrschicht 4 aber auch von einer Folie gebildet sein.

Die Klebstoffschicht 3 insbesondere die Kleisterschicht wird vorzugsweise in die Sperrschicht 4 hineingedrückt unter Wärmezufuhr, so dass es zu einer thermischen Fixierung und im Wesentlichen zu keiner chemischen Fixierung des Klebstoffs kommt. Hierbei wird eine Temperatur gewählt, bei der die Sperrschicht 4 nur angeschmolzen wird.

Vorzugsweise wird die Klebstoffschicht 3 insbesondere die Kleisterschicht mit einem Zusatz versehen, der ein Trockenabziehen ermöglicht. Dies geschieht insbesondere durch Einbringen von Wachs wie Wachskügelchen, Stearate oder Mikrokapseln mit Wachs-, Öle oder andere hygroskopische Substanzen im Inneren, so dass hydrophobe kleine Punkte auf der Rückseite der Tapete gebildet werden, an denen die Tapete nicht klebt und damit ein leichtes Abziehen der Tapete ermöglicht wird, wenn sie durch einen anderen Wandbelag ersetzt werden soll.

Die vorderseitige Lage 2 des Wandbelags 1 besteht entweder aus Papier, Papiervlies aus Cellulose- und Kunststofffasern, Raufaser oder Textile. Hierbei kann die Textile ein Gewebe, ein Gewirke, ein Vlies oder ein Filz sein.

An bestimmten Stellen insbesondere in bestimmten Bereichen weist die wasserundurchlässige Sperrschicht 4 eine höhere Anzahl wasserdurchlässiger Stellen oder Bereiche 5 auf, die regelmäßig über die Sperrschicht 4 verteilt sind. An diesen freien Stellen/Bereichen kann das Wasser bzw. die Feuchtigkeit aus der Klebstoffschicht 3 nach vorne gelangen, so dass an diesen Stellen/Bereichen die Klebstoffschicht schneller trocknet als an den übrigen Bereichen, so dass an diesen Stellen/Bereichen der Wandbelag 1 frühzeitig an der Wand sicher anhaftet und damit der Wandbelag nicht mehr rutschen bzw. sich verziehen kann. Hierdurch ist sichergestellt, dass die Wandbelagsbahnen unverändert an der Wand haften, ohne zu schrumpfen und ohne die Nähte zum Öffnen zu bringen.

Die Stellen/Bereiche 5 sind von der Sperrschicht frei bleibende Zonen, die in einer Ausführung durch Einschnitte entstehen, die parallel zur Bahnenlängsrichtung liegen. Diese Schnittstellen können durch Strecken der Wandbelagsbahn quer zur Längsrichtung erweitert bzw. geöffnet werden, so dass linsenförmige Öffnungen entstehen, durch die Feuchtigkeit aus der Klebstoffschicht entweichen kann.

Alternativ wird die Sperrschicht 4durch ein Druckverfahren auf die Rückseite der vorderseitigen Lage 2 aufgebracht, wobei beim Druckverfahren offene Stellen oder Bereiche in der Sperrschicht 4 verbleiben.

Beim Bedrucken kann der Kleister/Kleber bereits in eine Dispersion eingearbeitet werden und zusammen in einem Arbeitsschritt aufgedruckt werden. Die Dispersionsanteile wirken hierbei absperrend gegenüber der vorderen Celluloselage.

Wird die Sperrschicht mit ihren freien Stellen oder Bereichen aufgedruckt, so wird in einer weiteren Ausführung die Sperrschicht in Form eines regelmäßigen Musters aufgebracht, das die freien Stellen/Bereiche bereits aufweist.

Optimale Ergebnisse werden erreicht, wenn die offenen Stellen oder Bereiche 3 bis 25 Prozent vorzugsweise 5 bis 10 Prozent der Fläche der Sperrschicht 4 bilden.

## Patentansprüche

1. Wandbelag (1) insbesondere Tapete mit einer vorderseitigen Lage (2) aus Papier, Papiervlies aus Cellulose- und Kunststofffasern, Raufaser oder Textile und einer durch Wasser aktivierbaren trockenen Klebstoffschicht (3) auf der Rückseite, **dadurch gekennzeichnet, dass** zwischen der vorderseitigen Lage (2) und der Klebstoffschicht (3) eine wasserundurchlässige Sperrschicht (4) angeordnet ist, die eine hohe Anzahl offener, wasserdurchlässiger Stellen oder Bereiche (5) aufweist.

2. Wandbelag nach Anspruch 1, **dadurch gekennzeichnet, dass** die offenen Stellen oder Bereiche (5) über die Fläche der Sperrschicht (4) gleichmäßig verteilt sind.

3. Wandbelag nach Anspruch 1 oder 2, **dadurch gekennzeichnet, dass** die offenen Stellen oder Bereiche (5) von eingeschnittenen Schlitzen gebildet sind.

4. Wandbelag nach Anspruch 3, **dadurch gekennzeichnet, dass** die Schlitze in Längsrichtung des bahnenförmigen Wandbelags angeordnet sind.

5. Wandbelag nach Anspruch 3 oder 4, **dadurch gekennzeichnet, dass** die Schlitze durch Strecken des Wandbelags quer zur Schlitzlängsrichtung sich öffnen lassen.

6. Wandbelag nach einem der vorherigen Ansprüche, **dadurch gekennzeichnet, dass** die Sperrschicht (4) einen Kunststoff insbesondere Polyethylen, Polypropylen oder einen Schmelzklebstoff aufweist oder von einer Folie gebildet ist.

7. Wandbelag nach einem der vorherigen Ansprüche, **dadurch gekennzeichnet, dass** die Klebstoffschicht (3) mit einem Zusatz versehen ist, zum Trockenabziehen des Wandbelags (1) von der Wand.

8. Wandbelag nach Anspruch 7, **dadurch gekennzeichnet, dass** der Zusatz Wachs insbesondere Wachskügelchen, Mikrokapseln und/oder Stearate aufweist.

9. Wandbelag nach einem der vorherigen Ansprüche, **dadurch gekennzeichnet, dass** die Klebstoffschicht (3) unter Erwärmung auf die Sperrschicht (4) aufgewalzt insbesondere hineingewalzt ist.

10. Wandbelag nach einem der vorherigen Ansprüche, **dadurch gekennzeichnet, dass** die Sperrschicht (4) durch ein Druckverfahren auf die Rückseite der vorderseitigen Lage (2) aufgebracht ist.

11. Wandbelag nach Anspruch 10, **dadurch gekennzeichnet, dass** beim Druckverfahren offene Stellen oder Bereiche (5) in der Sperrschicht (4) verbleiben.

12. Wandbelag nach Anspruch 10 oder 11, **dadurch gekennzeichnet, dass** durch das Druckverfahren die Sperrschicht (4) in Form eines regelmäßigen Musters mit offenen Stellen oder Bereichen (5) aufgebracht wird.

13. Wandbelag nach einem der vorherigen Ansprüche, **dadurch gekennzeichnet, dass** die offenen Stellen oder Bereiche (5) 3 bis 25 Prozent vorzugsweise 5 bis 10 Prozent der Fläche der Sperrschicht (4) bilden.
